(19) Europäisches Patentamt / European Patent Office / Office européen des brevets

(11) **EP 2 779 209 B1**

(12) **FASCICULE DE BREVET EUROPEEN**

(45) Date de publication et mention de la délivrance du brevet:
**04.05.2022   Bulletin 2022/18**

(21) Numéro de dépôt: **14158255.1**

(22) Date de dépôt: **07.03.2014**

(51) Classification Internationale des Brevets (IPC):
**G01G 3/16** *(2006.01)*      **G01N 29/02** *(2006.01)*

(52) Classification Coopérative des Brevets (CPC):
**G01G 3/16; G01N 29/022**

(54) **Dispositif de determination de la masse d'une particule en suspension ou en solution dans un fluide**

Vorrichtung zur Bestimmung der Masse eines in einem Fluid suspendierten oder gelösten Partikels

Device for determining the mass of a particle in suspension or in solution in a fluid

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.03.2013   FR 1352154**

(43) Date de publication de la demande:
**17.09.2014   Bulletin 2014/38**

(73) Titulaire: **Commissariat à l'Énergie Atomique et aux Énergies Alternatives
75015 Paris (FR)**

(72) Inventeurs:
• **Hentz, Sébastien**
  **38760 VARCES ALLIERES ET RISSET (FR)**
• **Masselon, Christophe**
  **38700 CORENC (FR)**

(74) Mandataire: **Ilgart, Jean-Christophe et al
BREVALEX
95, rue d'Amsterdam
75378 Paris Cedex 8 (FR)**

(56) Documents cités:
FR-A1- 2 979 705        US-A1- 2011 186 167
US-A1- 2012 199 736

• **A. K. NAIK ET AL: "Towards single-molecule nanomechanical mass spectrometry", NATURE NANOTECHNOLOGY, vol. 4, no. 7, 21 juin 2009 (2009-06-21), pages 445-450, XP055024639, ISSN: 1748-3387, DOI: 10.1038/nnano.2009.152**

## Description

## DOMAINE TECHNIQUE

La présente invention concerne un dispositif de détermination de la masse d'une particule en suspension ou en solution dans un fluide.

Elle s'applique notamment à la spectrométrie de masse pour des espèces qui sont neutres ou ionisées.

## ÉTAT DE LA TECHNIQUE ANTÉRIEURE

La spectrométrie de masse (MS) classique est un outil d'analyse chimique ou biologique universel qui repose sur quatre composants essentiels : un système d'injection, une source d'ionisation, un analyseur de masse et un détecteur d'ions. Ces composants sont disposés dans une enceinte, pourvue de pompes pour y faire le vide.

Le résultat d'une mesure de spectrométrie de masse est un spectre qui traduit l'abondance, dans un mélange, d'un type d'espèces en fonction du rapport masse/charge de ces espèces. Chaque pic du spectre est la signature d'un ion mono-chargé ou multi-chargé ; et l'identification des espèces se fait grâce à une banque de données pré-établie.

La technique que l'on vient de décrire est maintenant devenue un standard pour de nombreuses applications. Cependant, elle présente un certain nombre d'inconvénients :

- cette technique est relativement longue à mettre en oeuvre et elle est peu sensible : beaucoup de matériel biologique est nécessaire pour réaliser une mesure ;
- les appareils de spectrométrie de masse commercialement disponibles sont tous extrêmement volumineux : ils occupent un volume de l'ordre de quelques mètres cubes ; et ils sont chers : ils coûtent plusieurs centaines de milliers d'euros ; et
- cette technique ne permet pas de mesurer des masses importantes qui sont typiquement supérieures à 100kDa ($1,66 \times 10^{-22}$ kg), masses pour lesquelles la résolution de mesure devient tout à fait insuffisante.

Ce dernier inconvénient résulte principalement de la difficulté à accélérer suffisamment une particule lourde, et à lui donner ainsi suffisamment d'énergie, pour qu'elle puisse atteindre le détecteur d'ions. Il est pourtant primordial de pouvoir mesurer des particules dont les masses sont supérieures à 100kDa ($1,66 \times 10^{-22}$ kg), puisqu'elles peuvent avoir une importance fondamentale dans le domaine biomédical : il s'agit par exemple de virus, de bactéries, d'organelles, de complexe protéiques ou de cellules.

Une autre technique a été proposée pour détecter des masses à l'aide de NEMS, c'est-à-dire de systèmes nano-électro-mécaniques (en anglais, *nano-electromechanical systems).* Et l'on a élaboré des dispositifs résonants à base de NEMS dont les limites de détection sont $10^{12}$ fois plus faibles que celles des QCM, c'est-à-dire des microbalances à quartz (en anglais, *quartz crystal microbalances),* qui sont commercialement disponibles. A ce sujet, on se reportera aux documents suivants :

K. L. Ekinci, X. M. H. Huang et M. L. Roukes, 2004, "Ultrasensitive nanoelectromechanical mass détection", Applied Physics Letters 84 (22): 4469. doi:10.1063/1.1755417
Michael L. Roukes et Kamil L. Ekinci, 2004, "Apparatus and method for ultrasensitive nanoelectromechanical mass détection"**,** US 6 722 200

On explique ci-après le principe d'un tel dispositif résonant à base de NEMS.

Une particule de masse $m_p$ se pose sur le NEMS, de raideur k et de masse effective m, ce qui augmente sa masse totale. La nouvelle fréquence de résonance du dispositif est alors égale à :

$$f = \frac{1}{2\pi}\sqrt{\frac{k}{m+m_p}}$$

. Les pics des réponses en fréquence (en boucle ouverte), avant et après dépôt de la masse $m_p$, sont donc décalés d'une quantité $\Delta f$ qui est peu différente de

$$-\frac{m_p}{2m}.\frac{1}{2\pi}\sqrt{\frac{k}{m}}$$

. Lorsque le dispositif est utilisé en boucle fermée, on peut donc suivre sa fréquence de résonance en temps réel à l'aide de moyens de transduction électrique et de moyens de fermeture de boucle.

Ainsi, lors de son adsorption sur un NEMS résonant, une particule individuelle d'analyte, ou un groupe de telles particules, fait brutalement décroître la fréquence de résonance du NEMS. Et l'on peut déduire la masse de la particule, ou du groupe de particules, à partir de la mesure du saut en fréquence $\Delta f$.

Ce saut en fréquence $\Delta f$ dépend de la masse de la particule, ou du groupe de particules (voir la valeur de $\Delta f$ donnée plus haut). Mais il dépend aussi de la position à laquelle la particule ou le groupe de particules s'est posé à la surface du NEMS. Lorsqu'il n'est pas possible - et c'est le cas le plus courant - de localiser précisément la position d'adsorption des particules sur le NEMS, la seule information de saut en fréquence ne suffit pas. On peut alors recourir à une approche statistique, qui consiste :

- à mesurer un grand nombre d'événements, chaque évènement correspondant à l'arrivée d'une seule particule ou d'un ensemble de particules, cette arrivée étant associée à un saut en fréquence, et
- à supposer une équiprobabilité de position à la surface du NEMS.

A ce sujet, on se reportera au document suivant :

A.K. Naik, M. S. Hanay, W. K. Hiebert, X. L. Feng et M. L. Roukes, 2009, "Towards single-molecule nanomechanical mass spectrometry", Nature Nanotechnology 4: 445-450. doi:10.1038/NNANO.2009.152**.**

Une autre solution consiste à mesurer en temps réel les fréquences de deux modes, ou plus, du même NEMS. On dispose ainsi de plusieurs informations. A ce sujet, on se reportera au document suivant :

S. Dohn, W. Svendsen, A. Boisen et O. Hansen, 2007, "Mass and position détermination of attached particles on cantilever based mass sensors", Review of Scientific Instruments 78: 103303. doi:10.1063/1.2804074**.**

Cette mesure de masse à l'aide de NEMS a conduit à utiliser ceux-ci pour faire de la spectrométrie de masse que l'on appelle alors la NEMS-MS. Dans cette technique, on mesure la distribution des masses de toutes les particules qui sont présentes dans un mélange et, pour ce faire, on les envoie les unes après les autres sur la surface d'un NEMS. Ceci permet la spectrométrie de masse biologique, au niveau de la particule individuelle, et procure les avantages suivants :

- du fait de l'intégrabilité des NEMS qui peuvent être fabriqués en grande quantité et de manière collective sur des plaques semiconductrices (en anglais, *semiconductor wafers*), la NEMS-MS est une technique fortement parallélisable, ce qui rend la mesure très rapide ; et, il devient envisageable de fabriquer des appareils de NEMS-MS portables et peu chers ;
- la détection de masse grâce aux NEMS, qui sont gravimétriques, est sensible aux ions comme aux particules neutres ; on améliore ainsi le rendement de mesure de plusieurs ordres de grandeur ; et
- la détection gravimétrique apporte une résolution en masse qui est constante dans toute la gamme de mesure, et fournit donc un excellent pouvoir de résolution dans les hautes masses, contrairement aux techniques classiques.

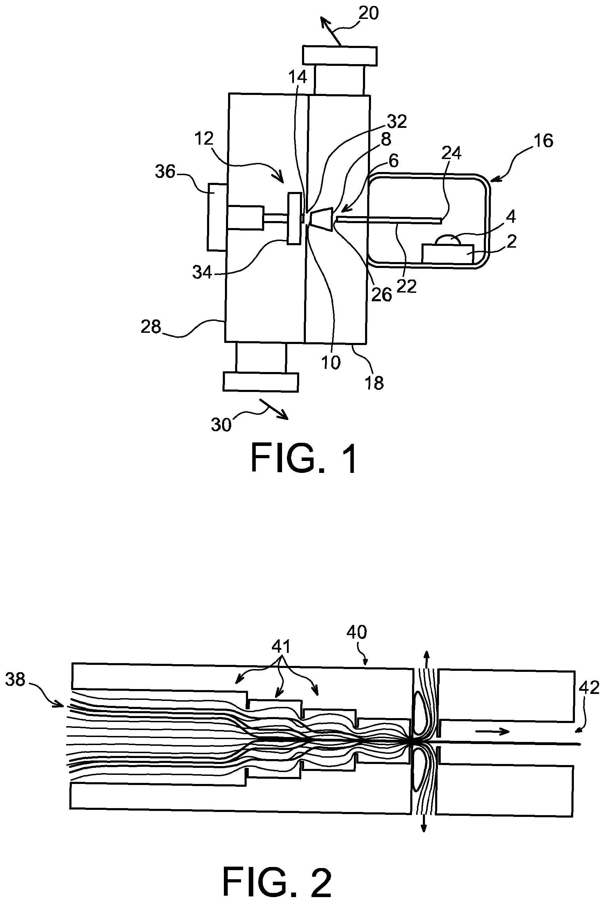

La figure 1 de l'article de A.K. Naik et al., déjà cité, montre un système de NEMS-MS connu, dont l'architecture est proche de celles des spectromètres de masse classiques : on injecte des des particules biologiques en phase liquide et on les transmet de la manière la plus efficace possible à un NEMS sous vide, plus précisément à une pression de l'ordre de $10^{-5}$ mTorr ($10^{-6}$ Pa).

Pour ce faire, des éléments commercialement disponibles sont utilisés : la source d'injection utilise une ESI c'est-à-dire une ionisation par électronébuliseur (en anglais, *electrospray ionization*) qui nébulise et ionise les espèces à analyser. Ces dernières passent par plusieurs étages de pompage différentiel et de guidage ionique (à l'aide d'hexapoles), pour finalement arriver dans la zone du NEMS.

Un tel système connu présente divers inconvénients qui ne permettent pas l'utilisation optimale de tous les avantages apportés par la technique NEMS-MS :

- dans ce système connu, la source d'injection et le NEMS sont très éloignés l'un de l'autre afin de permettre le pompage différentiel ; il en résulte d'importantes pertes d'espèces entre la source et le NEMS ;
- cet éloignement impose de guider les espèces vers le NEMS ; et dans ce système, seules les espèces ionisées le sont; les particules neutres sont perdues dans le système ; et
- avec un tel éloignement, il est très difficile de focaliser un faisceau d'ions sur une surface inférieure à quelques millimètres carrés; ainsi, une proportion très faible de particules se posent effectivement sur le NEMS dont la surface est typiquement de l'ordre de quelques micromètres carrés.

Tous ces inconvénients rendent ce système connu très peu efficace et ne permettent pas de tirer pleinement partie des avantages de la NEMS-MS. On voit en particulier l'avantage potentiel qu'il y aurait d'utiliser un système dédié aux espèces neutres et/ou indifféremment ionisées. En effet, la transmission par optique ionique (et donc à l'aide de champs électromagnétiques) d'espèces généralement lourdes, du genre de celles qui sont particulièrement visées par la NEMS-MS (organelles, virus, bactéries, complexes protéiques, etc...), est très difficile. Pour transmettre ces particules massives avec un rendement correct, il faudrait les rendre fortement chargées, ce qui aurait pour effet de les dénaturer et ne permettrait plus de les mesurer dans leur état natif.

Des dispositifs résonants utilisant des NEMS sont également connus par les documents suivants :

WO 2012/034949**, invention de S. Hentz**
WO 2012/034951, invention de S. Hentz et al.
WO 2012/034990, invention de S. Hentz**.**

La demande FR 2 979 705 A1 décrit un dispositif d'estimation d'un paramètre de masse moléculaire dans un échantillon comportant une chaîne de traitement et un dispositif de traitement de signal. La chaîne de traitement comprend notamment un vaporisateur, un ionisateur, un hexapôle de focalisation, un spectromètre de masse à capteur de type MEMS ou NEMS et un système de lecture du capteur.

La demande US 2011/186167 A1 décrit une lentille aérodynamique agencée pour être disposée en entrée d'un spectromètre de masse pour aérosol.

## EXPOSÉ DE L'INVENTION

La présente invention a pour but de remédier aux inconvénients du système de NEMS-MS connu, décrit ci-dessus, en associant un dispositif d'injection d'espèces neutres et/ou ionisées, un dispositif de guidage, et un détecteur de type NEMS, le tout favorisant la proximité de ces divers composants.

De façon précise, la présente invention a pour objet un dispositif de détermination de la masse d'au moins une particule en suspension ou en solution dans un fluide selon la revendication 1.

Le dispositif, objet de l'invention, permet ainsi de déterminer la masse de chaque particule, en suspension ou en solution, ou d'un ensemble de particules, suivant le débit du flux utilisé et le type d'analyte contenant les particules à analyser. Bien entendu, par « particule », on entend une particule individuelle ou un agrégat de particules.

Selon un mode de réalisation particulier du dispositif, objet de l'invention, le deuxième dispositif est électriquement neutre.

Un tel dispositif électriquement neutre a pour avantage de transmettre indifféremment les ions positifs et les ions négatifs ainsi que des particules neutres.

Le deuxième dispositif comprend une lentille aérodynamique.

Cette lentille aérodynamique peut être associée, en sortie, à un orifice. Le dispositif, objet de l'invention, comprend en outre :

- une zone à une pression donnée, contenant le premier dispositif, et
- au moins une enceinte à vide, ou première enceinte, prévue pour être à une première pression, inférieure à la pression de ladite zone, la première enceinte communiquant avec la zone et contenant au moins une partie du deuxième dispositif.

Par « pression donnée », on entend une pression qui peut être une pression d'air (la pression atmosphérique) ou une pression d'un autre gaz, suivant l'application envisagée pour l'invention.

Alors, le deuxième dispositif peut comprendre en outre un capillaire ayant un orifice d'entrée dans la zone et un orifice de sortie dans la première enceinte, pour mettre la zone en communication avec la première enceinte.

Dans ce cas, le deuxième dispositif peut comprendre une lentille aérodynamique en regard de l'orifice d'entrée et/ou de sortie du capillaire.

Ainsi, la concentration ou focalisation du flux peut se faire indifféremment en entrée et/ou en sortie du capillaire.

Selon un mode de réalisation particulier, le dispositif, objet de l'invention, comprend en outre une autre enceinte à vide, ou deuxième enceinte, prévue pour être à une deuxième pression, qui peut être inférieure à la première pression, cette deuxième enceinte contenant le troisième dispositif et communiquant avec la première enceinte par un premier orifice en regard du détecteur gravimétrique.

Le détecteur gravimétrique peut être choisi parmi les systèmes nano-électromécaniques, les systèmes micro-électromécaniques, les microbalances à quartz, les résonateurs à SAW ou résonateurs à ondes acoustiques de surface (en anglais, *surface acoustic wave resonators*), les résonateurs à BAW ou résonateurs à ondes acoustiques de volume (en anglais, *bulk acoustic wave resonators*) et les détecteurs d'impact.

Le premier dispositif peut être choisi parmi les nébuliseurs à ultrasons, les dispositifs de nébulisation induite par des microondes, les nébuliseurs à réseaux de microcapillaires et les nébuliseurs à ondes acoustiques de surface.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un mode de réalisation particulier du dispositif, objet de l'invention,
- la figure 2 illustre schématiquement le principe d'une lentille de focalisation aérodynamique,
- la figure 3 illustre schématiquement un exemple de système de focalisation aérodynamique complet, et
- la figure 4 illustre schématiquement et partiellement un exemple plus simple de dispositif de focalisation aérodynamique, utilisable dans la présente invention.

## EXPOSÉ DÉTAILLÉ DE MODES DE RÉALISATION PARTICULIERS

La figure 1 est une vue schématique d'un mode de réalisation particulier du dispositif de détermination de la masse d'une particule en suspension ou en solution dans un fluide, objet de l'invention. Ce dispositif comprend :

- un dispositif 2 pour la nébulisation du fluide, à savoir un analyte déposé sous forme de gouttelette 4 dans l'exemple représenté, pour obtenir un flux comprenant au moins la particule,
- un dispositif pour le guidage et la focalisation aérodynamique du flux, ce dispositif comprenant une lentille de focalisation aérodynamique 6 dont l'entrée a la référence 8 et la sortie a la référence 10, et
- un dispositif 12 pour la détermination de la masse de la particule par une mesure fréquentielle, le troisième dispositif comprenant au moins un détecteur gravimétrique 14, disposé en regard de la sortie 10 de la lentille de focalisation aérodynamique 6, pour recevoir la particule.

Comme on le voit, le dispositif représenté sur la figure 1 comprend aussi :

- une zone 16 à une pression donnée, par exemple la

pression atmosphérique (environs $10^5$ Pa), cette zone contenant le dispositif de nébulisation 2, et

- une enceinte à vide 18 qui communique avec la zone 16 et contient le dispositif 6 et dans laquelle on établit un vide primaire, à savoir une pression résiduelle de l'ordre de $10^2$ Pa, à l'aide d'une pompe primaire qui est symbolisée par la flèche 20.

Le dispositif pour le guidage et la focalisation aérodynamique du flux comprend aussi un capillaire (rectiligne) 22 ayant un orifice d'entrée 24 dans la zone 16 et un orifice de sortie 26 dans l'enceinte 18, pour mettre la zone 6 en communication avec cette enceinte 18. L'entrée du dispositif pour le guidage et la focalisation aérodynamique du flux est constituée par l'orifice d'entrée 24 du capillaire 22 et la sortie de ce dispositif pour le guidage et la focalisation aérodynamique du flux est constituée par la sortie 10 de la lentille de focalisation aérodynamique 6.

On précise que le capillaire 22 permet également de désolvater les particules en suspension ou en solution.

Le dispositif représenté sur la figure 1 comprend aussi une autre enceinte à vide 28 dans laquelle on établit un vide secondaire, à savoir une pression résiduelle de l'ordre de $10^{-2}$ Pa, à l'aide d'une pompe turbomoléculaire qui est symbolisée par la flèche 30 (mais, dans d'autres exemples de l'invention, les enceintes 18 et 28 pourraient être à la même pression).

L'enceinte 28 contient le dispositif 12 et communique avec l'enceinte 18 par un orifice 32 en regard du détecteur 14.

Ce détecteur 14 est monté sur une platine de micropositionnement 34, elle-même montée sur une traversée scellée (en anglais, *sealed feedthrough*) 36, comme on le voit sur la figure 1.

Le capillaire 22 est aligné avec cet orifice 32, et le dispositif 6 est compris entre l'orifice 32 et l'orifice de sortie 26 du capillaire 22.

Ainsi, dans l'exemple de la figure 1, les analytes sont présents en phase liquide et une portion de liquide est nébulisée par le dispositif 2, ce qui produit un aérosol de très petites gouttelettes contenant les analytes, majoritairement neutres, dont une partie peut éventuellement être ionisée. Du fait de la différence de pression entre la zone 16 et l'enceinte 18, cet aérosol est aspiré dans le capillaire d'entrée 22. En regard de celui-ci est placée la lentille de focalisation aérodynamique 6 qui permet de guider indifféremment les espèces neutres et les ions vers le détecteur 14, situé dans l'enceinte à vide secondaire 28.

Le mode de réalisation de l'invention représenté sur la figure 1, comprend deux chambres de pompage différentiel, à savoir les enceintes 18 et 28, mais on peut aussi réaliser un dispositif conforme à l'invention comportant plus de deux chambres de pompage différentiel, voire une seule.

Dans l'exemple de la figure 1, le détecteur 14 comprend un unique NEMS mais on peut aussi réaliser un dispositif conforme à l'invention où ce détecteur comprend un réseau (en anglais, *array*) de tels NEMS.

Les moyens de lecture et de contrôle du détecteur 14 ne sont pas représentés. Ce détecteur 14 peut être contrôlé, ou non, en température. Il en est de même pour le capillaire d'entrée 22.

Il est avantageux d'utiliser un NEMS pour la détection; mais on peut également utiliser tout autre détecteur gravimétrique (MEMS, QCM, SAW, BAW) ou, plus généralement, un détecteur de force inertielle, en particulier un détecteur d'impact. Au sujet de ce dernier, on se reportera par exemple au document suivant :
Jonghoo Park, Hua Qin, Mark Scalf, Ryan T. Hilger, Michael S. Westphall, Lloyd M. Smith et Robert H. Blick, 2011, "A Mechanical Nanomembrane Detector for Time-of-Flight Mass Spectrometry", Nano Letters 11: 3681-3684**.**

La lentille de focalisation aérodynamique 6 est plus simplement appelée "lentille aérodynamique". On sait que cette dernière est en fait composée d'une série de lentilles aérodynamiques élémentaires. Des exemples de lentilles aérodynamiques sont donnés plus loin.

Dans l'invention, l'utilisation de telles lentilles permet de guider en particulier les espèces neutres afin de maximiser le rendement de mesure. On n'utilise donc pas un guidage électrostatique du genre de celui qu'on emploie en optique ionique.

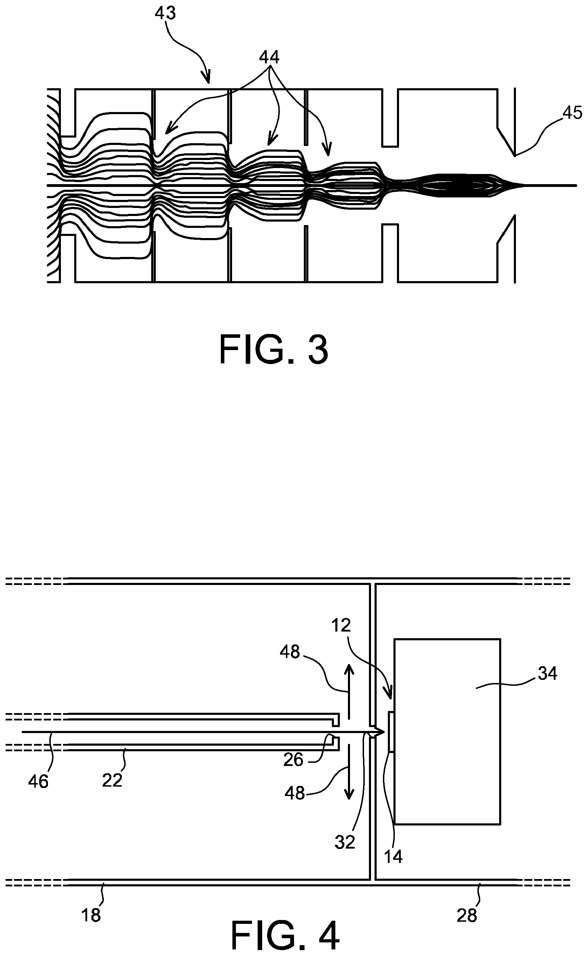

On rappelle qu'une lentille aérodynamique comprend une série d'orifices qui constituent des lentilles aérodynamiques élémentaires. Ces orifices peuvent avoir des tailles identiques (voir la figure 3 sur laquelle on reviendra par la suite) ou des tailles différentes, par exemple des tailles décroissantes (voir la figure 2 sur laquelle on reviendra par la suite). Au travers de ces orifices, un aérosol dilué est aspiré. La majorité du gaz porteur (et la majorité des molécules d'eau aspirées par le capillaire 22 utilisé dans l'exemple de la figure 1), gaz qui est léger et libre de particules, diffuse dans le volume que l'on trouve à la sortie de la lentille, alors que les particules lourdes (par rapport aux molécules de gaz), telles que les molécules biologiques, acquièrent une quantité de mouvement suffisante pour être collectées, par le flux de sortie, sous la forme d'un jet très fin. Sous certaines conditions, ce jet peut même être focalisé en un point (point focal).

Les lentilles aérodynamiques sont couramment utilisées dans les spectromètres de masse destinés à mesurer des particules présentes dans des aérosols mais, dans ce dernier cas, ces lentilles ne sont pas utilisées pour le guidage et la focalisation des particules vers un détecteur puisque les espèces sont toujours ionisées à la suite de leur introduction dans un spectromètre de masse : elles sont utilisées pour la concentration et le tri des espèces à mesurer, avant leur passage dans le spectromètre.

Dans une forme élaborée, un dispositif de focalisation utilisable dans l'invention comprend (voir la figure 2) un orifice d'entrée 38, permettant le contrôle du flux et le différentiel de pression, et une lentille aérodynamique 40 constituée par une série de lentilles élémentaires 41. Cette série de lentilles élémentaires 41 permet de resserrer les lignes de flux de particules au fur et à mesure de leurs parcours le long du dispositif. A la sortie de la série de lentilles élémentaires 41, on peut placer un orifice 42 permettant de capter le faisceau collimaté de particules lourdes alors que les molécules légères (par exemple des molécules de solvant) ont une diffusion volumique et s'échappent.

A ce sujet, on pourra se reporter au document suivant :

US 2008/0022853, « Aerodynamic lens particle separator », invention de P. Ariessohn.

La figure 3 illustre schématiquement un autre exemple de dispositif de focalisation aérodynamique, utilisable dans la présente invention et comportant une lentille aérodynamique élémentaire ou une série 43 de lentilles aérodynamiques élémentaires 44 et, à la sortie de cette série de lentilles élémentaires, un canal 45. Ce canal 45 (ou nez d'accélération) peut être un canal convergent ou un canal convergent/divergent suivant la vitesse des particules, et aide également à la focalisation de ces particules

On précise que l'on peut utiliser seulement une partie des composants du dispositif de la figure 3 dans l'invention. Au sujet de ce dispositif représenté sur la figure 3, on pourra se reporter à la documentation technique fournie par la société Aerodyne Research, et notamment à :

ARI Aerosol Mass Spectrometer, Opération Manual, page 9.

La lentille aérodynamique 40 (respectivement 43) de la figure 2 (respectivement de la figure 3) peut bien entendu être associée à un capillaire du genre du capillaire 22, placé à l'entrée et/ou à la sortie de cette lentille aérodynamique, ou associée à un orifice du genre de l'orifice 42 de la figure 2.

La figure 4 est une vue schématique et partielle d'un autre dispositif conforme à l'invention, dans lequel le dispositif de focalisation aérodynamique est simplement composé du capillaire d'entrée 22, de son orifice de sortie 26 et de l'orifice d'entrée 32 vers l'enceinte à vide secondaire 28 où se trouve le NEMS 14. Sur cette figure 4, le sens de circulation des flux longitudinaux est inversé par rapport à la figure 1. Et les flèches 48 représentent un flux radial de molécules légères à la sortie du capillaire 28.

Dans l'invention, on peut utiliser tout type de dispositif de nébulisation, notamment un nébuliseur à ultrasons, un dispositif de nébulisation induite par des microondes ou un nébuliseur à réseau de microcapillaires.

Avantageusement, on utilise un SAWN c'est-à-dire un nébuliseur à onde acoustique de surface. A ce sujet, on se reportera au document suivant :

David R. Goodlett, Scott R. Heron et Jon Cooper, 2011, "Ions generated by surface acoustic wave device detected by mass spectrometry", WO 2011/060369 A1.

Il s'agit, dans ce cas, d'utiliser un résonateur à onde acoustique de surface, sur lequel on vient déposer une goutte de liquide contenant les analytes. L'onde acoustique de surface produite par le résonateur dissipe son énergie dans le liquide qui, alors, se nébulise.

Ce mode de nébulisation présente l'intérêt de n'ioniser qu'une très faible partie des analytes, avec une énergie d'ionisation très faible également. De plus, il est capable de désorber des gouttes entières d'eau, ainsi que des particules biologiques dans une grande gamme de masses. De plus, un tel dispositif de nébulisation est intégrable. On peut l'obtenir par des méthodes de microfabrication collective. Et, il est envisageable d'intégrer toute l'architecture de la présente invention lorsqu'on utilise un tel dispositif intégrable.

Dans les exemples de l'invention donnés plus haut, le dispositif de guidage et de focalisation est électriquement neutre. Cela signifie qu'aucun champ électromagnétique n'est appliqué à ce dispositif ou produit par celui-ci.

Pour le guidage et la focalisation, on utilise de préférence un tel dispositif électriquement neutre. Toutefois, on pourrait aussi utiliser un dispositif de guidage et de focalisation qui n'est pas électriquement neutre, plus précisément dont une face latérale est polarisée avec une certaine tension afin de séparer les espèces neutres des espèces ionisées ou, au contraire, polariser le dispositif de manière à obtenir un champ électromagnétique susceptible de focaliser uniquement les espèces neutres.

Dans l'exemple de la figure 1, la lentille aérodynamique 6 est associée au capillaire 22. Mais on peut aussi envisager un mode de réalisation de l'invention dans lequel le deuxième dispositif, servant au guidage et à la focalisation aérodynamique du flux, comporte un diaphragme ou un orifice à la place du capillaire.

## Revendications

1. Dispositif de détermination de la masse d'au moins une particule en suspension ou en solution dans un fluide, comprenant :

   - un premier dispositif (2) pour la nébulisation du fluide (4), pour obtenir un flux comprenant au moins ladite au moins une particule,
   - un deuxième dispositif (6, 22, 40, 44) pour le guidage et la focalisation du flux, le deuxième dispositif comportant une entrée (24, 38) pour recevoir le flux, et une sortie (10, 42), et
   - un troisième dispositif (12) pour la détermination de la masse de ladite au moins une particule par une mesure fréquentielle, le troisième dispositif comprenant au moins un détecteur gravimétrique (14), disposé en regard de la sortie du deuxième dispositif, pour recevoir ladite au moins une particule,

- une zone (16) à une pression donnée, contenant le premier dispositif (2), et

- au moins une enceinte à vide (18), ou première enceinte, prévue pour être à une première pression, inférieure à la pression de ladite zone, la première enceinte communiquant avec la zone (16) et contenant au moins une partie du deuxième dispositif,

le dispositif étant **caractérisé en ce que** le deuxième dispositif comprend une lentille aérodynamique (6, 40, 44) disposée dans la première enceinte (18).

2. Dispositif selon la revendication 1, dans lequel le deuxième dispositif (6, 22, 40, 44) est électriquement neutre.

3. Dispositif selon l'une des revendications 1 et 2, dans lequel la lentille aérodynamique est associée, en sortie, à un orifice (42).

4. Dispositif selon l'une des revendications précédentes, dans lequel le deuxième dispositif comprend en outre un capillaire (22) ayant un orifice d'entrée (24) dans la zone (16) et un orifice de sortie (26) dans la première enceinte (18), pour mettre la zone (16) en communication avec la première enceinte (18).

5. Dispositif selon la revendication 4, dans lequel la lentille aérodynamique (6) est disposée en regard de l'orifice d'entrée (24) et/ou de sortie (26) du capillaire (22).

6. Dispositif selon l'une quelconque des revendications 1 à 5, comprenant en outre une autre enceinte à vide (28), ou deuxième enceinte, prévue pour être à une deuxième pression, éventuellement inférieure à la première pression, contenant le troisième dispositif (12), et communiquant avec la première enceinte (18) par un premier orifice (32) situé en regard du détecteur gravimétrique (14).

7. Dispositif selon l'une quelconque des revendications 1 à 6, dans lequel le détecteur gravimétrique (14) est choisi parmi les systèmes nano-électromécaniques, les systèmes micro-électromécaniques, les microbalances à quartz, les résonateurs à ondes acoustiques de surface, les résonateurs à ondes acoustiques de volume et les détecteurs d'impact.

8. Dispositif selon l'une quelconque des revendications 1 à 7, dans lequel le premier dispositif (2) est choisi parmi les nébuliseurs à ultrasons, les dispositifs de nébulisation induite par des microondes, les nébuliseurs à réseaux de microcapillaires et les nébuliseurs à ondes acoustiques de surface.

**Patentansprüche**

1. Vorrichtung zur Bestimmung der Masse mindestens eines in einem Fluid suspendierten oder gelösten Partikels, umfassend:

    - eine erste Vorrichtung (2) zum Zerstäuben des Fluids (4), um einen Strom zu erhalten, der mindestens das mindestens eine Partikel umfasst,
    - eine zweite Vorrichtung (6, 22, 40, 44) zum Führen und Fokussieren des Stroms, wobei die zweite Vorrichtung einen Einlass (24, 38) zum Aufnehmen des Stroms und einen Auslass (10, 42) umfasst, und
    - eine dritte Vorrichtung (12) zum Bestimmen der Masse des mindestens einen Partikels durch eine Frequenzmessung, wobei die dritte Vorrichtung mindestens einen gravimetrischen Detektor (14) umfasst, der gegenüber dem Auslass der zweiten Vorrichtung angeordnet ist, um das mindestens ein Partikel aufzunehmen,
    - eine Zone (16) mit einem gegebenen Druck, die die erste Vorrichtung (2) enthält, und
    - mindestens eine Vakuumkammer (18), oder erste Kammer, die dazu vorgesehen ist einen ersten Druck aufzuweisen, der niedriger ist als der Druck der Zone, wobei die erste Kammer mit der Zone (16) in Verbindung steht und mindestens einen Teil der zweiten Vorrichtung enthält, wobei die Vorrichtung dadurch charakterisiert ist, dass die zweite Vorrichtung eine aerodynamische Linse (6, 40, 44) umfasst, die in der ersten Kammer (18) angeordnet ist.

2. Vorrichtung nach Anspruch 1, bei der die zweite Vorrichtung (6, 22, 40, 44) elektrisch neutral ist.

3. Vorrichtung nach einem der Ansprüche 1 und 2, bei der die aerodynamische Linse am Ausgang einer Öffnung (42) zugeordnet ist.

4. Vorrichtung nach einem der vorhergehenden Ansprüche, bei der die zweite Vorrichtung ferner eine Kapillare (22) mit einer Einlassöffnung (24) in der Zone (16) und einer Auslassöffnung (26) in der ersten Kammer (18) umfasst, um die Zone (16) in Verbindung mit der ersten Kammer (18) zu setzen.

5. Vorrichtung nach Anspruch 4, bei der die aerodynamische Linse (6) gegenüber der Einlassöffnung (24) und/oder Auslassöffnung (26) der Kapillare (22) angeordnet ist.

6. Vorrichtung nach einem der Ansprüche 1 bis 5, ferner umfassend eine weitere Vakuumkammer (28), oder zweite Kammer, die dazu vorgesehen ist einen zweiten Druck aufzuweisen, der gegebenenfalls niedriger als der erste Druck ist, die die dritte Vorrichtung (12) enthält und mit der ersten Kammer (18) über eine erste Öffnung (32), die sich gegenüber dem gravimetrischen Detektor (14) befindet, in Verbindung steht.

7. Vorrichtung nach einem der Ansprüche 1 bis 6, bei der der gravimetrische Detektor (14) ausgewählt ist aus den nanoelektromechanischen Systemen, den mikroelektromechanischen Systemen, den Quarzmikrowaagen, den Oberflächenschallwellenresonatoren, den Volumenschallwellenresonatoren und den Aufprallsensoren.

8. Vorrichtung nach einem der Ansprüche 1 bis 7, bei der die erste Vorrichtung (2) ausgewählt ist aus den Ultraschallzerstäubern, den mikrowelleninduzierten Zerstäubervorrichtungen, den Mikrokapillarnetz-Zerstäubern und den Oberflächenschallwellenzerstäubern.

**Claims**

1. Device for determining the mass of at least one particle in suspension or in solution in a fluid, comprising:

   - a first device (2) for the nebulization of the fluid (4), to obtain a flux comprising at least said at least one particle,
   - a second device (6, 22, 40, 44) for the guidance and the focusing of the flux, the second device comprising an inlet (24, 38) to receive the flux, and an outlet (10, 42), and
   - a third device (12) for determining the mass of said at least one particle by a frequency measurement, the third device comprising at least one gravimetric detector (14), arranged opposite the outlet of the second device, to receive said at least one particle,
   - a zone (16) at a given pressure, containing the first device (2), and
   - at least one vacuum enclosure (18), or first enclosure, provided to be at a first pressure, below the pressure of said zone, the first enclosure communicating with the zone (16) and containing at least one part of the second device,

   the device being **characterized in that** the second device comprises an aerodynamic lens (6, 40, 44) arranged in the first enclosure (18).

2. Device according to claim 1, in which the second device (6, 22, 40, 44) is electrically neutral.

3. Device according to one of claims 1 and 2, in which the aerodynamic lens is associated, at the outlet, with an orifice (42).

4. Device according to one of previous claims, in which the second device further comprises a capillary (22) having an inlet orifice (24) in the zone (16) and an output orifice (26) in the first enclosure (18), to place the zone (16) in communication with the first enclosure (18).

5. Device according to claim 4, in which the aerodynamic lens (6) is arranged opposite the inlet (24) and/or outlet (26) orifice of the capillary (22).

6. Device according to any one of claims 1 to 5, further comprising another vacuum enclosure (28), or second enclosure, provided to be at a second pressure, optionally below the first pressure, containing the third device (12), and communicating with the first enclosure (18) via a first orifice (32) situated opposite the gravimetric detector (14).

7. Device according to any one of claims 1 to 6, in which the gravimetric detector (14) is selected from nano-electromechanical systems, micro-electromechanical systems, quartz crystal microbalances, surface acoustic wave resonators, bulk acoustic wave resonators and impact detectors.

8. Device according to any one of claims 1 to 7, in which the first device (2) is selected from ultrasonic nebulizers, microwave induced nebulization devices, microcapillary array nebulizers and surface acoustic wave nebulizers.

FIG. 1

FIG. 2

FIG. 3

FIG. 4

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6722200 B
- WO 2012034949 A
- WO 2012034951 A, S. Hentz
- WO 2012034990 A, S. Hentz
- FR 2979705 A1
- US 2011186167 A1
- US 20080022853 A, P. Ariessohn
- WO 2011060369 A1

**Littérature non-brevet citée dans la description**

- **K. L. EKINCI ; X. M. H. HUANG ; M. L. ROUKES.** Ultrasensitive nanoelectromechanical mass détection. *Applied Physics Letters,* 2004, vol. 84 (22), 4469
- **MICHAEL L. ROUKES ; KAMIL L. EKINCI.** *Apparatus and method for ultrasensitive nanoelectromechanical mass détection,* 2004
- **A.K. NAIK ; M. S. HANAY ; W. K. HIEBERT ; X. L. FENG ; M. L. ROUKES.** Towards single-molecule nanomechanical mass spectrometry. *Nature Nanotechnology,* 2009, vol. 4, 445-450
- **S. DOHN ; W. SVENDSEN ; A. BOISEN ; O. HANSEN.** Mass and position détermination of attached particles on cantilever based mass sensors. *Review of Scientific Instruments,* 2007, vol. 78, 103303
- **JONGHOO PARK ; HUA QIN ; MARK SCALF ; RYAN T. HILGER ; MICHAEL S. WESTPHALL ; LLOYD M. SMITH ; ROBERT H. BLICK.** A Mechanical Nanomembrane Detector for Time-of-Flight Mass Spectrometry. *Nano Letters,* 2011, vol. 11, 3681-3684
- ARI Aerosol Mass Spectrometer. Opération Manual. 9
- **DAVID R. GOODLETT ; SCOTT R. HERON ; JON COOPER.** *Ions generated by surface acoustic wave device detected by mass spectrometry,* 2011